# DEMANDE DE BREVET EUROPEEN

(11) **EP 0 583 197 A1**
(43) Date de publication de la demande: **16.02.1994**
(21) Numéro de dépôt: 93402030.6
(22) Date de dépôt: 09.08.1993
(51) Int. Cl.: B01D 53/34

(54) **Procédé de dépollution de fumées de chaudières à combustible liquide par refroidissement et lavage des fumées, et neutralisation des effluents**

(30) Priorité: 13.08.1992 FR 9209996
(71) Demandeur: AQUAFRANCE, F-95700 Roissy (FR)
(72) Inventeur: Courtaud, Yves, F-77170 Brie Comte Robert (FR); Caveriviere, Claude, F-94300 Vincennes (FR)
(74) Mandataire: Armengaud Ainé, Alain

(57) **Abrégé**

Pour dépolluer les fumées produites dans une chaudière (1), on fait passer les fumées, en les dérivant d'un tronçon de cheminée (13), de bas en haut dans un échangeur thermique (3) dans son ensemble, pour récupérer la chaleur latente de l'eau dans les fumées. En tête d'échangeur (31), on pulvérise de l'eau, puisée dans un volume de réserve (50), et additionnée d'une solution sodique (52) pour neutraliser les oxydes de soufre et une partie du CO₂. Dans la cuve (33) en pied d'échangeur (3), on recueille un effluent composé de l'eau pulvérisée chargée en sulfite, sulfate et carbonates, des condensats, et de suie abattue. L'effluent est repris dans la cuve de pied (33) et, après ajout d'une dose de floculant (45), est envoyé à un décanteur (4) où les boues sédimentent en fond (41), tandis que l'effluent clair retourne au volume de réserve (50). Un trop-plein (55) évacue les excédents d'effluent résultant des condensats.

## Description

L'invention se rapporte à un procédé de dépollution de fumées issues d'un foyer de chaudière à combustible liquide, notamment fioul lourd, par élimination de composants indésirables, notamment acides, où l'on fait passer les fumées, avant leur rejet dans l'atmosphère, suivant un trajet vertical dans un échangeur thermique propre à récupérer de la chaleur latente de composants condensables avec de la chaleur sensible des fumées tandis que l'on pulvérise en tête de l'eau que l'on recueille en pied sous forme d'un effluent comprenant, outre cette eau, des condensats et de la suie abattue.

Il est inutile de s'étendre sur les conséquences du rejet dans l'atmosphère des fumées issues des foyers à combustibles liquides, ceux-ci étant essentiellement des hydrocarbures. Ces fumées contiennent, principalement de l'eau et des oxydes de carbone CO et CO₂ avec de l'azote fournie par l'air comburant. Pour rappeler les ordres de grandeur, la combustion de 1 kg d'hydrocarbure demande environ 17,5 kg d'air, les fumées contenant, en admettant que tout le carbone soit transformé en CO₂, approximativement 14 kg d'azote, 3,14 kg de CO₂, 1,28 kg d'eau, et moins de 0,5 kg d'oxygène.

Par ailleurs, la combustion des hydrocarbures donne lieu à création de divers polluants: à la température de la flamme, les réactions entre oxygène et azote de l'air comburant donnent naissance à des oxydes d'azote, le soufre à des composés sulfurés contenus dans les hydrocarbures donne des gaz soufrés, essentiellement SO₂ et SO₃; les hydrocarbures contiennent des traces de nombreux éléments dont notamment des métaux lourds; enfin, la combustion des hydrocarbures riches en carbone forme des suies.

On remarquera que les quantités d'oxydes d'azote et de monoxyde de carbone sont fonction du régime de flamme. S'il est possible, par injection d'air secondaire, par exemple, de réduire le taux de monoxyde de carbone des fumées, il n'est pratiquement pas possible de réduire le taux d'oxydes d'azote après leur formation.

Sous un autre aspect, si le rejet de vapeur d'eau dans l'atmosphère ne constitue pas en soi une pollution, cette vapeur d'eau emporte sa chaleur latente de condensation. D'autre part, en se condensant au contact de l'atmosphère, notamment au sortir de la cheminée (le panache) elle entraîne vers le sol une partie des polluants qui l'accompagnent dans les fumées; d'autre part, l'énergie emportée sous forme de chaleur latente doit être compensée par une surconsommation de combustible.

On a proposé de faire passer les fumées en parcours vertical dans un échangeur thermique, et de laver les fumées par pulvérisation d'eau en tête d'échangeur, et de recueillir cette eau en pied de l'échangeur, sous forme d'un effluent contenant des condensats et de la suie abattue. Le refroidissement des fumées fait récupérer la chaleur latente des condensats (qui peut être utilisée pour réchauffer l'eau d'alimentation de la chaudière). De plus, l'effluent a dissout du gaz carbonique, et des anhydrides sulfureux et sulfurique, dont sont débarrassées les fumées.

Mais la dépollution apparaît insuffisante, en raison des solubilités limitées des anhydrides carbonique et sulfureux dans l'eau à la température de l'effluent, nécessairement relativement élevée. En outre, l'anhydride sulfurique ne représente jamais qu'une part mineure des oxydes de soufre, tandis que sa dissolution dans l'eau réduit encore la solubilité des anhydrides carbonique et sulfureux.

De surcroît, l'effluent sortant en pied de l'échangeur doit être traité avant d'être rejeté dans l'environnement. L'élimination des suies présente des difficultés particulières, car le comportement des suspensions est très fortement affecté par la composition du milieu de suspension.

Pour pallier ces insuffisances, l'invention propose un procédé de dépollution de fumées issues d'un foyer de chaudière à combustible liquide, notamment fioul lourd, par élimination de composants indésirables, notamment acides, où l'on fait passer les fumées, avant leur rejet dans l'atmosphère, suivant un trajet vertical dans un échangeur thermique propre à récupérer de la chaleur latente de composants condensables avec de la chaleur sensible des fumées, tandis que l'on pulvérise en tête de l'eau que l'on recueille en pied sous forme d'un effluent comprenant, outre cette eau, des condensats et de la suie abattue, procédé caractérisé en ce que l'on dispose d'un volume d'eau de réserve, on envoie de l'eau puisée dans le volume de réserve en tête de l'échangeur pour la pulvériser après ajout d'une solution alcaline en quantité appropriée à la neutralisation des composants acides des fumées, on reprend en pied d'échangeur l'effluent, on l'additionne d'une dose efficace d'un floculant, on décante l'effluent pour obtenir en fond une boue de suie et en surface un effluent clarifié que l'on envoie au volume d'eau de réserve.

En ajoutant une solution alcaline à l'eau pulvérisée en tête d'échangeur, on arrive à fixer la quasi-totalité du SO₃ présent dans les fumées, et jusqu'à 95% du SO₂, tandis que l'on élimine une part mineure mais non négligeable de CO₂. L'addition d'un floculant à l'effluent repris en pied d'échangeur permet de décanter les suies et de réutiliser l'effluent clarifié pour la pulvérisation en tête d'échangeur. La consommation d'eau est très réduite, d'autant que l'apport des condensats assure un renouvellement de l'eau du volume de réserve dont la charge en matières dissoutes reste modérée, tandis que les déversements dans l'environnement sont pratiquement inoffensifs. Enfin, la presque totalité des métaux lourds se retrouvent dans les boues de suies, dont en outre le volume et la consistance permettent des manipulations et éliminations aisées.

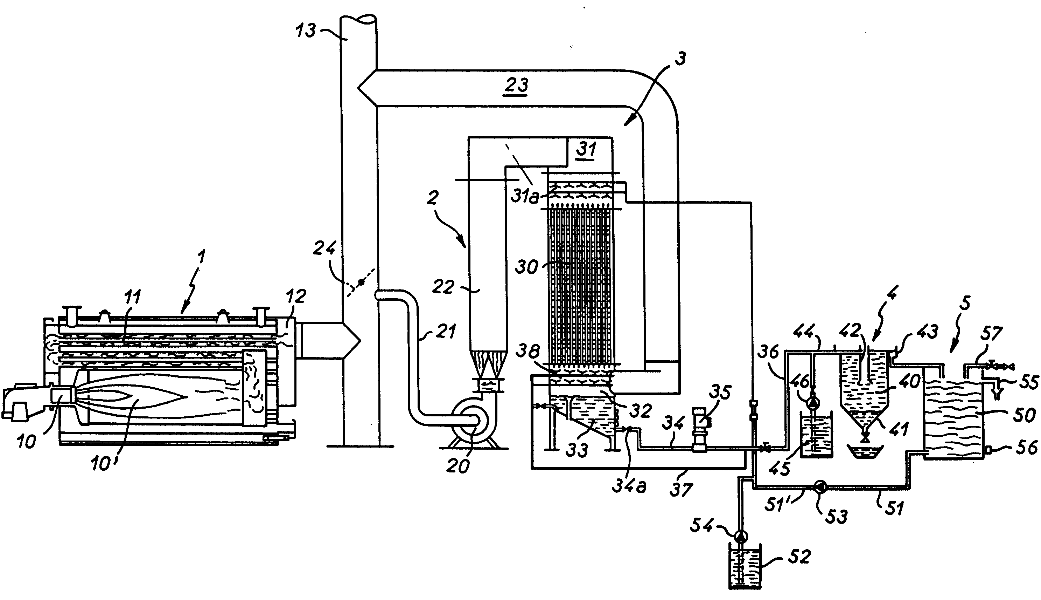

D'autres caractéristiques et avantages de l'invention ressortiront d'ailleurs de la description qui va suivre à titre d'exemple en référence au dessin unique annexé, qui représente une chaudière à foyer à combustible liquide associée à un équipement pour la mise en oeuvre du procédé suivant l'invention.

Comme représenté sur le dessin, la chaudière 1 dans son ensemble comprend un brûleur 10 qui forme une flamme horizontale 10', les gaz chauds parcourant un réseau de tubes traversant une chambre d'eau, avant de se rassembler dans une boîte à fumée 12, reliée à une cheminée 13. Cette chaudière peut être entièrement classique.

Un circuit de dérivation 2 dans son ensemble est disposé en parallèle sur la partie inférieure de la cheminée 13. Un piquage 21, à faible hauteur au-dessus du débouché de la boîte à fumée 12 dans la cheminée 13 aboutit à l'ouïe d'entrée d'un ventilateur de tirage 20. La sortie du ventilateur 20 est munie d'une tubulure verticale 22 qui aboutit en tête d'un échangeur 3 qui sera décrit ci-après. Une tubulure 23 part du pied de l'échangeur 3 pour rejoindre la cheminée 13 à un niveau supérieur à celui du piquage 21. Un papillon 24 est disposé dans la cheminée 13 entre le piquage 21 et le débouché dans la tubulure 23. On comprend que, lorsque le ventilateur 20 est mis en rotation, et que le papillon 24 obture la cheminée 13, les fumées sont envoyées en tête de l'échangeur 3, le traversent verticalement de haut en bas, et retournent à la cheminée 13 par la tubulure 23. Le papillon 24 empêche ainsi que les fumées débouchant de la tubulure 23 dans la cheminée 13 ne soient aspirées à contre-courant par le ventilateur 20. Par contre, le ventilateur 20 arrêté et le papillon 24 ouvert, les fumées passent de bas en haut dans la cheminée 13 pour être dispersées dans l'atmosphère, sans intervention des appareillages spécifiques de l'invention.

L'échangeur, 3 dans son ensemble, est constitué d'une tour verticale, où est logé un échangeur thermique 30 constitué d'une chambre cylindrique alimentée en eau, et traversée verticalement par un faisceau de tubes de fumée. Cette chambre sert de réchauffeur pour l'eau d'alimentation de la chaudière. Au-dessus de l'échangeur thermique se trouve une boîte à fumée de tête 31, où débouche la tubulure 22 venant du ventilateur 20. Dans cette boîte à fumée de tête 31 est disposée une pluralité de buses de pulvérisation 31a dirigées vers le bas et alimentées par une canalisation 31b.

En dessous de l'échangeur thermique 30 est disposée une boîte à fumée de pied 32, d'où part la tubulure 23 vers la cheminée 13.

En dessous de cette boîte à fumée de pied 32, l'échangeur 3 est conformé en cuve de recueil 33, avec une sortie de point bas 34a, d'où part une canalisation de reprise 34 aboutissant à l'ajutage d'entrée d'une pompe de circulation 35, de l'ajutage de sortie de laquelle part une canalisation 36 qui aboutit à un décanteur 4, qui sera décrit ci-après. Une canalisation 37 de recyclage est piquée sur la canalisation 36, et aboutit d'une part dans la cuve de recueil 33 à travers une vanne d'étranglement, et d'autre part à des rampes de pulvérisation 38 disposées dans la boîte à fumée 32 de pied, au niveau du départ de la tubulure 23.

Le décanteur 4 est constitué d'un corps cylindrique 40 avec un fond conique 41 muni d'une vanne d'extraction des boues sédimentées. La partie supérieure du corps 40 forme lame de déversoir, et est entourée d'une goulotte circulaire 43 présentant un point bas d'où part une canalisation de départ de liquide clarifié, qui se déverse dans un réservoir 5, qui sera décrit ci-après.

Au centre du corps est disposé un tube vertical 42, qui dépasse le niveau du bord supérieur de corps, et s'étend en profondeur à mi-hauteur du corps; dans ce tube 42 se déverse une canalisation d'arrivée 44, pour le liquide chargé à décanter.

La canalisation 44 prolonge la canalisation 36 reliée à l'ajutage de sortie de la pompe de circulation 35, au-delà d'un confluent avec la sortie d'une pompe doseuse 46 qui puise dans un réservoir 45 contenant un floculant.

Le réservoir 5 comporte une cuve 50, qui contient un volume de réserve muni d'un trop-plein 55, et reçoit du liquide issu du décanteur 4 par la canalisation 43. La cuve est munie d'une canalisation de reprise 51 munie d'une pompe volumétrique 53. Un pH mètre 56 disposé également en partie basse de la cuve permet un contrôle du pH dans la cuve 50, et le cas échéant une régulation. Au-delà de la pompe volumétrique 53, la canalisation 51' rejoint la canalisation 31b qui alimente les buses de pulvérisation 31a dans la boîte à fumée de tête 31 de l'échangeur 3. Mais, peu après la sortie de la pompe volumétrique 53, la canalisation 51 reçoit l'appoint d'une solution alcaline (solution de soude à 20,4 g/l environ) puisée dans un réservoir 52 par une pompe doseuse 54.

Une arrivée d'eau 57, munie d'une vanne, permet d'amener au niveau du trop-plein le contenu de la cuve 50, chaque fois qu'il est nécessaire.

On va maintenant exposer le fonctionnement de l'ensemble en régime permanent.

Le brûleur 10 étant en action, ainsi que le ventilateur 20, tandis que le papillon 24 est orienté pour obturer la cheminée 13, les fumées issues de la boîte à fumée 12 traversent l'échangeur 30 depuis la boîte à fumée de tête 31 jusqu'à la boîte à fumée de pied 32. Le refroidissement des fumées dans l'échangeur 30 provoque une condensation de la majeure partie de la vapeur d'eau formée dans la flamme. Comme on l'a signalé précédemment, l'eau qui est délivrée dans le circuit de refroidissement de l'échangeur 30 s'échauffe et peut être utilisée, soit pour alimenter la chaudière 1, soit comme une source d'eau chaude auxiliaire. D'un autre côté, la pompe volumétrique 53 puise dans le réservoir 50 formant volume de réserve, pour l'envoyer dans les rampes de pulvérisation de tête 31a de l'échangeur 3. A cette eau est ajoutée de la solution de soude contenue dans le réservoir 52, en quantité, dosée par la pompe doseuse 54, telle que les composants acides des fumées soient neutralisés. On reviendra plus loin sur ce qu'il convient d'entendre par neutralisation des composants acides.

L'eau de lavage pulvérisée en tête et les condensats des fumées se retrouvent sous forme d'un effluent dans la cuve 33. La pompe de circulation 35 puise dans cette cuve 33 pour envoyer l'effluent en direction du décanteur 4. La canalisation de recyclage 37 prélève une partie de l'effluent sortant de la pompe 35, pour la renvoyer vers la cuve de pied 33, soit directement, soit par l'intermédiaire des rampes de pied 38. Le débit de recirculation est réglé de telle sorte que le niveau d'effluent dans la cuve 33 atteigne et dépasse le niveau inférieur du départ de la tubulure 23. On crée ainsi au niveau du départ des fumées une forte turbulence qui augmente la surface de séparation liquide/gaz en pied d'échangeur pour améliorer le captage des composants acides.

L'effluent recueilli dans la cuve 33 contient en suspension des suies abattues par la pulvérisation en tête. L'ajout d'un floculant organique (A1881) provenant de la cuve 45 et injecté par la pompe doseuse 46 permet aux suies de sédimenter en fond de décanteur 41, tandis que l'effluent clarifié déborde dans la goulotte 43 pour retourner au volume de réserve 50. On remarquera que l'effluent chargé est introduit au centre du corps cylindrique 40, de sorte qu'il ne se mélange pas au liquide clarifié.

On notera qu'en raison de la présence des condensats de fumées, le volume d'effluent qui retourne au volume de réserve 50 est nettement supérieur au volume d'eau pulvérisé par les rampes de tête 31a. Ainsi, en régime permanent, l'excédent d'effluent clarifié dans le réservoir 50 s'écoule par le trop-plein 55, sous forme d'un effluent secondaire.

Le taux alcalimétrique complet (TAC) de l'effluent, défini par son pH, doit être compatible avec le taux admis règlementairement pour un rejet sans danger pour l'environnement, ainsi que le taux de matières en suspension (MES) et la demande chimique en oxygène (DCO) dans l'effluent. Ces différents paramètres ne sont pas indépendants.

En effet, le floculant n'a d'action sur la sédimentation des suies que dans une gamme de pH autour du point de neutralité théorique de 7 qui ne dépasse pas la valeur de 8,5 pour les pH basiques. A une valeur de pH supérieure, les suies se retrouveraient dans l'effluent secondaire, si toutefois la pulvérisation d'eau chargée de suie en tête d'échangeur ne devait pas interdire la mise en oeuvre du procédé.

D'un autre côté, les composants acides sont le CO₂ et les composés du soufre SH₂, SO₂ et SO₃. Avec une flamme bien réglée avec un excès de comburant de 10 à 20 %, le dihydrure de soufre est produit en quantité négligeable. La majeure partie du soufre passe à l'état d'anhydride sulfureux, et une partie mineure à l'état d'anhydride sulfurique.

La neutralisation de cet anhydride sulfurique par la soude ne pose pratiquement pas de problèmes. Le recyclage par la canalisation 37 permet d'arrêter jusqu'à 95 % du SO₂ à un pH d'environ 7,5-8. Une mesure du pH dans la cuve et un réglage du taux de solution de soude injecté dans les rampes de tête 31a de l'échangeur 3 permettent de concilier les exigences contradictoires de la neutralisation de l'effluent, et de l'élimination ou la récupération des boues de suies. Au sortir du décanteur, ces boues ont un taux de siccité de 20 %, ce qui permettrait éventuellement de les brûler en combustible d'appoint.

L'élimination du CO₂ des fumées apparaît nettement plus difficile car, d'une part la combustion du fioul dégage beaucoup plus de CO₂ que de composés soufrés (un fioul à 0,55 % en poids de soufre dégage en brûlant environ 1 % en poids de composés soufrés, et plus de 300 % de CO₂), et d'autre part la neutralisation complète des anions carboniques ne se produit qu'à un pH élevé.

Or on a vu que la floculation des suies nécessitait de limiter le pH de l'effluent. Il est donc important de doser correctement la solution de soude ajoutée à l'eau pulvérisée en tête de l'échangeur 3. Cela peut être obtenu en asservissant le dosage de la pompe 54 au pH mesuré par le pH mètre 56 sur le volume d'eau de réserve 50, et en assurant un mélange efficace de l'eau pulvérisée avec les condensats dans la cuve 33 en pied d'échangeur.

Accessoirement, on peut envisager d'ajouter à l'eau pulvérisée en tête d'échangeur du péroxyde d'hydrogène, pour assurer une oxydation sensiblement complète des sulfites en sulfates pour réduire la DCO. Le plus souvent, on effectuera l'oxydation sur l'effluent final sortant par le trop-plein 55.

A ce stade, l'oxydant pourra être simplement de l'eau de Javel (hypochlorite de sodium). De plus, après oxydation amenant pratiquement tous les composés du soufre à l'état de sulfates, ceux-ci pourront, à leur tour, être précipités sous forme de sulfate de calcium par addition d'une quantité appropriée de chaux, de façon qu'après sédimentation du sulfate de calcium, l'effluent contienne des sulfates à une teneur compatible avec la sécurité de l'environnement, et les règlementations en vigueur. Le sulfate de calcium peut être valorisable en tant que produit d'amendement de sols.

Au sujet du rejet de CO₂ dans les fumées, on notera que les essais sur pilote ont permis d'arrêter 10 à 15 % du CO₂ des fumées par alcalinisation de l'eau de pulvérisation, sans rompre le floc de suies. Si l'on ajoute que la récupération de chaleur latente et sensible dans les fumées apporte une récupération d'énergie de 10 à 15 %, on constate que, à égalité d'énergie thermique utilisable, la quantité de CO₂ rejetée dans l'atmosphère est réduite de 20 à 28 %. On se souviendra que, si les oxydes de soufre et d'azote sont des polluants atmosphériques en quelque quantité qu'ils soient rejetés dans l'atmosphère, le CO₂ n'est polluant que lorsque sa concentration locale dépasse notablement son taux de présence normal dans l'atmosphère et est susceptible d'influencer les grands équilibres atmosphère-biosphère-mers.

Pour le démarrage de l'installation, l'allumage du brûleur sera précédé de la mise en action de la pompe de circulation 35 et de la pompe volumétrique 53. Dès l'allumage du brûleur, le ventilateur 20 est mis en route, tandis que le papillon 24 est fermé, puis les pompes doseuses 46 et 54 sont mises en action à un débit correspondant à un régime moyen, déterminé antérieurement, de fonctionnement de l'installation. Puis les débits sont réglés, manuellement ou par asservissement, pour les adapter au régime actuel de l'installation.

On a effectué des essais sur une installation pilote, couplée à une chaudière de piscine, qui présentait les caractéristiques suivantes :

| | |
|---|---|
| Puissance thermique à la flamme du brûleur | 100 kW |
| Combustible fioul TBS à | 0,55 % de soufre en poids |
| PCI du combustible | 10 180 kcal/kg |
| Consommation du combustible | 9 kg/heure |
| Volume des fumées | 115 Nm³/heure |

On a obtenu les résultats suivants :

| | |
|---|---|
| Gain de rendement de combustion | 10-11 % |
| Elimination du SO₂ | 98 % |
| Elimination du CO₂ | 15 % |
| Taux de capture des suies | 90-95 % |

Par ailleurs, on a constaté que le taux de CO rejeté dans l'atmosphère était réduit de 33 %, et le taux d'oxydes d'azote de 4 %. En outre la siccité des boues était d'environ 20 %; après séchage, les pertes au feu atteignaient 90 %; ce dernier résultat permet d'envisager, pour des puissances installées de l'ordre du MW, un recyclage des boues dans le foyer, améliorant encore le rendement thermique.

Bien entendu, l'invention n'est pas limitée à l'exemple décrit, mais en embrasse toutes les variantes d'exécution, dans le cadre des revendications.

## Revendications

1. Procédé de dépollution de fumées issues d'un foyer de chaudière (1) à combustible liquide, notamment fioul lourd, par élimination de composants indésirables, notamment acides, où l'on fait passer les fumées, avant leur rejet dans l'atmosphère, suivant un trajet vertical dans un échangeur thermique (3) propre à récupérer de la chaleur latente de composants condensables avec de la chaleur sensible des fumées, tandis que l'on pulvérise en tête (31a) de l'eau que l'on recueille en pied (33) sous forme d'un effluent comprenant, outre cette eau, des condensats et de la suie abattue, procédé caractérisé en ce que l'on dispose d'un volume (50) d'eau de réserve, on envoie de l'eau puisée dans le volume (50) de réserve en tête de l'échangeur pour la pulvériser après ajout d'une solution alcaline (52) en quantité appropriée à la neutralisation des composants acides des fumées, on reprend en pied d'échangeur (33) l'effluent, on l'additionne d'une dose efficace d'un floculant (45), on décante (4) l'effluent pour obtenir en fond (41) une boue de suie et en surface (42) un effluent clarifié que l'on envoie au volume d'eau de réserve (50).

2. Procédé suivant la revendication 1, caractérisé en ce que l'on fait circuler les fumées dans l'échangeur (3) dans le sens tête-pied.

3. Procédé suivant la revendication 2, caractérisé en ce que l'échangeur (3) est disposé en dérivation sur un trajet de fumée entre le foyer (1) et une cheminée (13) pour le rejet dans l'atmosphère, la circulation dans l'échangeur étant forcée (20).

4. Procédé suivant l'une quelconque des revendications 1 à 3, caractérisé en ce qu'on réinjecte, en pied d'échangeur (33, 38), une part de l'effluent que l'on y recueille.

5. Procédé suivant l'une quelconque des revendications 1 à 4, caractérisé en ce que l'on mesure (56) le pH de l'eau dans le volume (50) de réserve, et l'on ajuste (54) la quantité de solution alcaline ajoutée à l'eau envoyée en tête d'échangeur (31a) pour maintenir le pH mesuré entre des limites choisies.

6. Procédé suivant une quelconque des revendications 1 à 5, caractérisé en ce que l'on procède, dans l'eau du volume de réserve, lorsqu'elle contient des sulfites indésirables, à des additions d'un oxydant aptes à transformer les sulfites en sulfates.

7. Procédé suivant l'une quelconque des revendications 1 à 6, caractérisé en ce que l'on évacue sous forme d'effluent final (55) le trop-plein du volume de réserve (50) causé par l'incorporation des condensats.

8. Procédé suivant les revendications 6 et 7 prises conjointement, caractérisé en ce que les additions d'oxydant sont effectuées sur l'effluent final.

9. Procédé suivant l'une quelconque des revendications 6 à 8, caractérisé en ce que, après que dans l'effluent final (55), sensiblement tous les sulfites aient été oxydés en sulfates, on précipite ces derniers sous forme de sulfate de calcium par addition de chaux.
